# EUROPÄISCHE PATENTSCHRIFT

(11) **EP 4 616 662 B1**
(45) Veröffentlichungstag und Bekanntmachung des Hinweises auf die Patenterteilung: **22.07.2026**
(21) Anmeldenummer: 24828399.6
(22) Anmeldetag: 13.12.2024
(51) Int. Cl.: H04W 72/0446, H04W 72/20, H04R 25/00, H04W 72/23, H04R 1/10

(54) **VERFAHREN ZUM STEUERN EINES DRAHTLOSEN MULTIKANAL-AUDIOSYSTEMS UND DRAHTLOSES MULTIKANAL-AUDIOSYSTEM**
METHOD FOR CONTROLLING A WIRELESS MULTICHANNEL AUDIO SYSTEM, AND WIRELESS MULTICHANNEL AUDIO SYSTEM
PROCÉDÉ DE COMMANDE D'UN SYSTÈME AUDIO MULTICANAL SANS FIL, ET SYSTÈME AUDIO MULTICANAL SANS FIL

(30) Priorität: 27.12.2023 DE 102023136692
(43) Veröffentlichungstag der Anmeldung: 17.09.2025
(73) Patentinhaber: Sennheiser electronic SE & Co. KG, 30900 Wedemark (DE)
(72) Erfinder: WATERMANN, Jan, 30161 Hannover (DE); MATTHIAS, Steffen, 30167 Hannover (DE); GEORGI, Sebastian, 30853 Langenhagen (DE); SCHENTEK, Jannik, 29356 Bröckel (DE)
(74) Vertreter: Eisenführ Speiser
(86) Internationale Anmeldenummer: PCT/EP2024/086367
(87) Internationale Veröffentlichungsnummer: WO 2025/140875

(56) Entgegenhaltungen:
- DE-A1- 102021 116 893
- US-A1- 2017 026 253
- "System Reference document (SRdoc); Technical characteristics and parameters for Wireless Multichannel Audio Systems (WMAS)", no. V0.0.10, 28 April 2023 (2023-04-28), pages 1 - 22, XP014467631, Retrieved from the Internet <URL:ftp://docbox.etsi.org/ERM/ERM/70-Drafts/00559r1/ERM-559r1v121_0010.zip tr_103450v000010p_with_tc.docx> [retrieved on 20230428]

## Beschreibung

Die vorliegende Erfindung betrifft ein Verfahren zum Steuern eines drahtlosen Multikanal-Audiosystems und ein drahtloses Multikanal-Audiosystem.

Drahtlose Multikanal-Audiosysteme sind aus ETSI EN 300422 bekannt. Ein derartiges Audiosystem stellt ein drahtloses Audiosystem dar, bei welchem mehrere Kanäle zur Audioübertragung verwendet werden. Hierbei können mehrere Drahtlos-Sender (beispielsweise Drahtlos-Mikrofone) und mehrere Drahtlos-Empfänger (beispielsweise In Ear-Monitoring Einheiten) gleichzeitig mit einer Basisstation kommunizieren.

In der prioritätsbegründenden deutschen Patentanmeldung hat das Deutsche Patent- und Markenamt die folgenden Dokumente recherchiert: DE 10 2021 116 893 A1 und US 2013/0089026 A1.

DE 10 2021 116 893 A1 zeigt ein Verfahren zum Steuern eines Multikanal-Audiosystems, das zwei mobile Geräte zum Senden und Empfangen von Audiostreams aufweist.

Es ist eine Aufgabe der vorliegenden Erfindung, ein drahtloses Multikanal-Audiosystem vorzusehen, welches eine verbesserte Übertragung von mehreren Audiostreams mit einer reduzierten Latenz ermöglicht.

Diese Aufgabe wird durch ein Verfahren zum Steuern eines drahtlosen Multikanal-Audiosystems nach Anspruch 1 sowie durch ein drahtloses Multikanal-Audiosystem nach Anspruch 9 gelöst.

Somit wird ein Verfahren zum Steuern eines Drahtlos-Multikanal-Audiosystems vorgesehen. Das Multikanal-Audiosystem weist mindestens zwei mobile Geräte zum Senden und/oder Empfangen von Audiodaten in Form mindestens eines Audiostreams und mindestens eine Basisstation auf. Die mobilen Geräte und die Basisstation tauschen Audiodaten in Form eines Audiostreams in einem Time Division Multiplex Access TDMA aus. Diese Drahtlos-Übertragung erfolgt auf der Basis von sich wiederholenden Frames. Jeder Frame weist eine Anzahl A von Zeitschlitzen auf. Jedes mobile Gerät überträgt oder empfängt mindestens einmal pro Frame Audiodaten eines Audiostreams in mindestens einem Zeitschlitz. Jeder in dem Frame übertragene Audiostream belegt einen Anteil der Zeitschlitze. Jeder in dem Frame übertragene Audiostream belegt einen Anteil der Zeitschlitze des Frames gemäß einer Übertragungsbetriebsart. Die Drahtlosübertragung zwischen der Basisstation und den mobilen Geräten erfolgt basierend auf einer Mehrzahl von möglichen Übertragungsbetriebsart jeweils mit unterschiedlichen TMDA Ressourcenanforderungen. Audiodaten werden in Form mindestens eines Audiostreams in einer der Übertragungsbetriebsarten übertragen. Aktuell belegte TDMA Ressourcen, nämlich Übertragungsparameter und/oder Systemparameter, des Audiostreams werden ermittelt. Die aktuell belegten TDMA Ressourcen, nämlich Übertragungsparameter und/oder Systemparameter, des Audiostreams werden auf einer Nutzerschnittstelle dargestellt. Auf eine Nutzereingabe hin werden TDMA Ressourcenanforderungen für den Audiostream in einer vorausgewählten Übertragungsbetriebsart ermittelt. Die TDMA Ressourcenanforderungen für eine vorausgewählte Übertragungsbetriebsart werden auf der Nutzerschnittstelle dargestellt, um einen Vergleich zwischen den aktuellen belegten TDMA Ressourcen in der aktuellen Übertragungsbetriebsart und den TDMA Ressourcenanforderungen in der durch den Nutzer vorausgewählten Übertragungsbetriebsart zu ermöglichen. Steuerdaten werden durch die Basisstation an die mobilen Geräte zum Ändern der Übertragungsbetriebsart auf die vorausgewählte Übertragungsbetriebsart übertragen, falls der Nutzer eine Änderung der Übertragungsbetriebsart initiiert hat.

Gemäß einem Aspekt erfolgt die Drahtlos-Übertragung in Frequenzbereichen 470 - 698MHz (UHF) oder 1350 - 1525MHz (1G4) erfolgen, insbesondere in Frequenzbändern von 270 bis 608 MHz, 470 bis 510 MHz, 630 bis 698 MHz, 1350 bis 1400 MHz oder 1435 bis 1525 MHz.

Gemäß einem weiteren Aspekt der vorliegenden Erfindung können die mobilen Geräte Drahtlos-Sender oder Drahtlos-Empfänger darstellen. Die Drahtlos-Sender können als Drahtlos-Mikrofone und die Drahtlos-Empfänger können als In Ear Monitoring-Einheiten ausgestaltet sein.

Die Erfindung betrifft ebenfalls ein Drahtlos-Multikanal-Audiosystem mit mindestens zwei mobilen Geräten zum Senden und/oder Empfangen von Audiodaten in Form mindestens eines Audiostreams und mindestens eine Basisstation. Die mobilen Geräte und die Basisstationen tauschen Daten drahtlos in einem TDMA Verfahren aus. Diese Drahtlos-Übertragung erfolgt auf Basis von sich wiederholenden Frames, wobei jeder Frame eine Anzahl A von Zeitschlitzen aufweist. Jedes mobile Gerät überträgt mindestens einmal pro Frame Audiodaten eines Audiostreams in mindestens einem Zeitschlitz. Jeder in dem Frame übertragene Audiostream weist einen Anteil der Zeitschlitze des Frames auf. Die Basisstation überträgt Steuerdaten an die mobilen Geräte zum Steuern der Drahtlos-Übertragung.

Es wird ein drahtloses Multikanal-Audiosystem, insbesondere gemäß ETSI EN 300422, vorgesehen. Das Audiosystem weist eine Mehrzahl von mobilen Geräten auf, die als Drahtlos-Sender, Drahtlos-Empfänger oder als Drahtlos-Sender/Empfänger ausgestaltet sein können. Das Multikanal-Audiosystem kann z.B. mindestens einen mobilen Audiosender, mindestens einen mobilen Audiodaten-Empfänger und eine Drahtlos-Basisstation aufweisen, welche Audiodaten in Form eines Audiostreams von den Audiodaten-Sendern empfängt und Audiodaten in Form eines Audiostreams an den mobilen Audiodaten-Empfänger in einem Time Division Multiplex Access (TDMA) Verfahren überträgt. Wenn mehrere Audiodaten-Sender in dem System vorgesehen sind, dann können die Audiostreams dieser Audiodaten-Sender in Zeitschnitzen (Time Slot) in einem Frame gemäß dem TDMA Verfahren übertragen werden.

Die mobilen Geräte können als Drahtlos-Mikrofone, z.B. handgehaltene Mikrofone, Drahtlos-Stereo-Mikrofone oder Drahtlos-Instrumentenmikrofone als Drahtlos-Empfänger (z.B. In-Ear Monitoringeinheiten) oder als Drahtlos-Sender/Empfänger (z.B. In-Ear Monitoringeinheiten mit einem Mikrofonanschluss) ausgestaltet sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines drahtlosen Multikanal-Audiosystems,
- Fig. 2: zeigt eine Darstellung von Zeitschlitzen verschiedener Drahtlos-Sender, welche von dem Drahtlos-Empfänger empfangen werden,
- Fig. 3: zeigt eine schematische Darstellung eines Frames bei der Übertragung der Audiodaten, und
- Fig. 4: zeigt eine schematische Darstellung einer Nutzerschnittstelle.

Drahtlose Multikanal-Audiosysteme WMAS sind aus ETSI EN 300422 bekannt. Hierbei können mehrere mobile Geräte, wie z.B. mehrere Mikrofone, mehrere In-Ear Monitoring Einheiten gleichzeitig mit einer Basisstation verwendet werden.

Wenn mehrere Audiosender (beispielsweise ein handgehaltenes Mikrofon oder andere Mikrofone) gleichzeitig Audiosignale zu einer Basisstation übertragen und die Basisstation ein aus diesen Audiosignalen zusammengesetztes zweites Audiosignal an eine In-Ear Monitoring Einheit oder ein Bodypack oder Beltpack überträgt, dann senden die Mikrofone nicht gleichzeitig, sondern der Teilnehmerzugriff erfolgt durch ein Time Division Multiple Access TDMA System mit einem sich wiederholenden Frame mit einer Anzahl von Zeitschlitzen pro HF Kanal. Z. B. können 128 Zeitschlitze pro Frame für die Übertragung von Audiostreams vorgesehen sein. Zusätzlich können Zeitschlitze für Steuerdaten vorgesehen sein. Damit können bis zu 128 mobile Geräte mit der Basisstation kommunizieren.

Durch das TDMA Verfahren wird ein Mehrfachzugriff durch zeitliche Abfolge mehrerer Teilnehmer auf eine drahtlose Audioübertragung gewährleistet. Die minimale Latenz wird durch den größten Abstand zweier aufeinander folgender Zeitschlitze bestimmt.

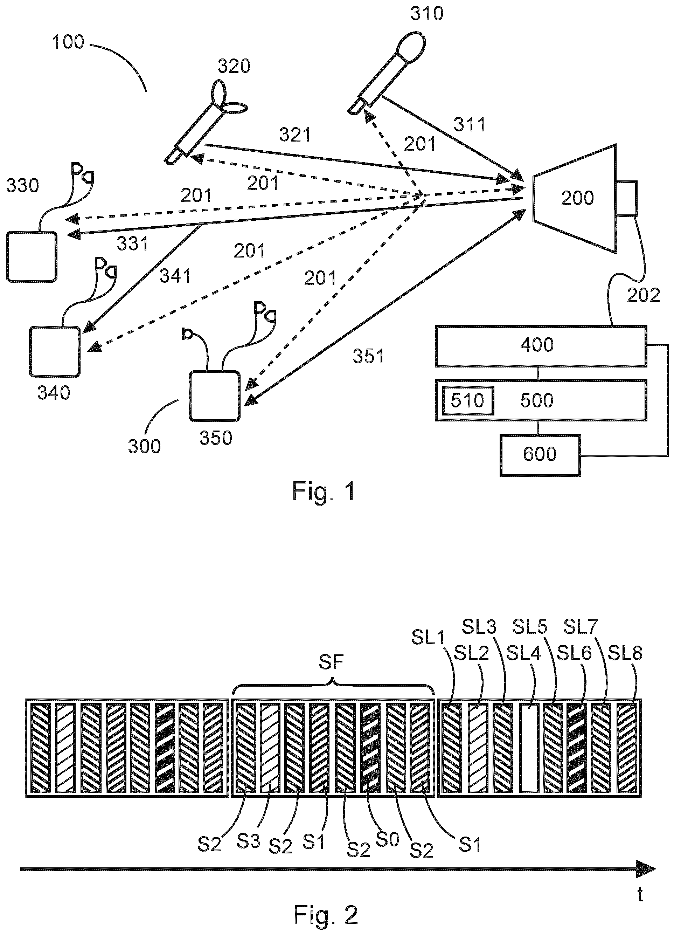

Fig. 1 zeigt eine schematische Darstellung eines drahtlosen Multikanal-Audiosystems. Das drahtlose Multikanal-Audiosystem WMAS 100 kann auf ETSI EN 300422 basieren und weist eine Basisstation 400, mindestens eine Antenne 200, und eine Mehrzahl von mobilen Geräten 300 auf, z.B. mindestens ein handgehaltenes Mikrofon (mobiler Sender) 310, optional mindestens ein Mehrkanalmikrofon (mobiler Sender) 320, optional einen ersten Bodypack oder Beltpack (mobiler Empfänger) 330 mit einem Ausgang für ein In-Ear Monitoring, optional einen kombinierten zweiten Bodypack oder Beltpack (mobiler Empfänger) 340 mit einem Eingang für Mikrofonsignale und einem Ausgang für ein In-Ear Monitoring. Somit kann die Anzahl der mobilen Sender 310, 320 oder mobilen Empfänger 330, 340, 350 in dem drahtlosen Multikanal-Audiosystem 100 variieren.

In dem drahtlosen Multikanal-Audiosystem 100 ist die Basisstation 400 mit einer Antenne 200 mittels eines Kabels 202 verbunden ist und stellt einen HF-Kanal bereit. Optional können mit der Basisstation 400 noch weitere Antennen verbunden sein, die weitere HF-Kanäle zur Verfügung stellen können. Die Antenne 200 kann einen HF-Sender ("Radiohead") aufweisen, sodass über das Kabel 202 digitale Signale übertragen werden, die in dem Radiohead in analoge HF-Signale umgesetzt werden.

Eine mit der Basisstation 400 verbundene Steuerkonsole 500 kann eine Benutzeroberfläche zur Verfügung stellen, mittels derer ein Bediener Konfigurations- und Steuerbefehle für die Basisstation 400 eingeben kann. Optional kann die Basisstation 400 mit einem Mischpult 600 gekoppelt sein. Mittels des Mischpultes 600 können die Audiosignal von den jeweiligen Drahtlos-Audiosendern (z.B. Mikrofone) zu einem Gesamtaudiosignal gemischt werden.

Das drahtlosen Multikanal-Audiosystem 100 kann beispielsweise eine Anzahl von Mikrofonen, nämlich ein handgehaltenes Mikrofon 310, ein Mehrkanal- bzw. Stereomikrofon 320 sowie mobile Empfangsgeräte 330, 340, 350 aufweisen. Die mobilen Empfangsgeräte 330 - 350 können einen Ausgang für ein sogenanntes In-Ear-Monitoring aufweisen, dass es einem Träger gestattet einen Audiokanal zu empfangen. Das mobile Empfangsgerät 350 kann zusätzlich mit einem Mikrofoneingang für ein Ansteckmikrofon bzw. Lavalier-Mikrofon ausgestattet sein. Der Benutzer des mobilen Empfangsgerätes 350 ist dadurch in der Lage, gleichzeitig einen Audiokanal zu empfangen und einen anderen Audiokanal zu übertragen. Die Mikrofone 310, 320 und mobilen Empfangsgeräte 330 - 350 werden im Folgenden zusammenfassend als mobile Geräte bezeichnet. In anderen Anwendungsfällen können auch mehr oder weniger mobile Geräte in das drahtlosen Multikanal-Audiosystem 100 integriert sein als in Fig. 1 dargestellt sind.

Das Mikrofon 310 kann erste Audiodaten 311 in Form eines Audiostreams an die Basisstation 400 senden. Das zweite Mikrofon 320 kann zweite Audiodaten 321 in Form eines Audiostreams an die Basisstation 400 senden. Das mobile Gerät 350 (Bodypack oder Beltpack) kann dritte Audiodaten 351 in Form eines Audiostreams an die Basisstation 400 (über die Antenne 200) senden. Die mobilen Geräte 330 und 340 können Audiodaten 331, 341 in Form eines Audiostreams von der Basisstation 400 empfangen

Die Basiseinheit 400 kann über die Antenne 200 Steuerdaten 201 an die jeweiligen mobilen Geräte, z. B. Sender/Empfänger 310, 320, 330, 340, 350 übertragen. Die Steuerdaten 201 können durch die mobilen Geräte 310 - 350 dazu verwendet werden, Parameter der Drahtlosübertragung einzustellen. Über die Steuerdaten 201 kann die Basisstation 400 den mobilen Geräten 300 Übertragungsparameter wie z.B. eine Übertragungsfrequenz, einen Zeitschlitz in dem Übertragungsframe, eine Sendeleistung etc. vorgeben. Die Basisstation 400 kann damit die Übertragung von den mobilen Geräten zu der Basisstation 400 und von der Basisstation 400 zu den mobilen Geräten 300 steuern.

Die Steuerdaten 201 können Steuer- und/oder Statusinformationen aufweisen, welche zwischen den mobilen Geräten und der Basisstation ausgetauscht werden. Zusätzlich zu den Steuerinformationen oder Steuerdaten können weitere Daten als Teil der Steuerdaten 201 ausgetauscht werden.

Beispielsweise kann in einem Fall mit 128 TDMA Zeitschlitzen pro Frame ein Zeitschlitz nach 16 Zeitschlitzen reserviert werden. Dieser Zeitschlitz kann für Steuerdaten wie z. B. Synchronisationsinformationen und Steuer- und Statussignale verwendet werden. Optional kann die Verwendung dieses Zeitschlitzes getrennt von den Ressourcen für die Echtzeit-Streams verwendet werden.

Optional kann ein Frame damit 128 TDMA Zeitschlitze für die Audioübertragung und 8 Zeitschlitze für Steuersignale aufweisen, so dass ein Frame beispielsweise 136 Zeitschlitze aufweist.

Alternativ dazu können die Steuerdaten auch in denjenigen Zeitschlitzen übertragen werden, welche nicht reserviert und damit frei sind. Hierbei werden dann keine separaten Zeitschlitze für die Übertragung der Steuerdaten vorgesehen, sondern die Steuerdaten werden dann je nach Möglichkeit übertragen.

Die Kommunikation von der Basisstation 400 zu den mobilen Geräten 340, 350 kann in einem Multicast und die Kommunikation von den Mobilgeräten 310, 320 zu der Basisstation 10 kann in einem Unicast erfolgen.

Die Steuerkonsole 500 kann mit der Basisstation 400 verbunden sein und kann eine Benutzeroberfläche (User Interface UI) aufweisen mittels welcher der Benutzer Konfigurations- und/oder Steuerbefehle für die Basisstation 400 eingeben kann

Das (handgehaltene) Mikrofon 310 kann Audiodaten als erste Audiodaten 311 in Form eines Audiostreams drahtlos als unidirektionale Funkübertragung an die Basisstation 400 übertragen. Diese Übertragung 311 kann in einem Unicast erfolgen. Hierbei kann die Audioübertragung in Form von Mono-Mikrofondaten erfolgen.

Das Mikrofon 320 kann Audiosignale 321 als Audiostream in Form einer unidirektionalen Funkübertragung. Hierbei können Stereo- oder Mehrkanalmikrofondaten in einem Unicast übertragen werden. Die ersten und/oder zweiten Bodypacks oder Beltpacks330, 340 (mobile Empfangseinheiten) können eine unidirektionale Funkübertragung (Audiodaten 331, 341) von der Basisstation 400 empfangen. Diese Funkübertragung kann z. B. In-Ear Monitoring-Daten aufweisen. Die Audiodaten 331, 341 können aus den Audiodaten 321, 311 von den beiden Mikrofonen 310, 320 sowie optional weiteren Audiodaten zusammengesetzt sein. Diese Daten können als Unicast oder Multicast von der Basisstation 400 übertragen werden. Der Bodypack oder Beltpack 350 (Empfangseinheit) kann mit der Basiseinheit 400 in Form einer bidirektionalen Funkübertragung kommunizieren. Die Mikrofondaten, welche das Bodypack oder Beltpack über den Mikrofoneingang empfangen hat, werden beispielsweise als Unicast an die Basisstation 400 übertragen. In-Ear Monitoringdaten werden von der Basisstation 400 als Unicast oder Multicast übertragen.

Die Audiodaten der jeweiligen Audiodaten-Sender (Mikrofone 310, 320) können in einem TDMA Verfahren übertragen werden. Durch das TDMA Verfahren wird ein Mehrfachzugriff durch zeitliche Abfolge mehrerer Teilnehmer auf eine drahtlose Audioübertragung gewährleistet. Für eine Übertragung mit geringer Latenz kann beispielsweise ein deterministisches und äquidistantes Raster von Zeitschlitzen pro Audiokanal verwendet werden. Die minimale Latenz wird durch den größten Abstand zweier aufeinander folgender Zeitschlitze bestimmt.

Falls ein Mehrkanal-Audiosystem vorgesehen werden soll, wobei mehr als zwei Audiokanäle von der Basisstation an die mobilen Empfänger übertragen werden sollen, dann müssen die übertragbaren Audiosamples in einem Frame auf die vorhandenen Audiokanäle aufgeteilt werden. Falls drei Audiokanäle übertragen werden sollen, dann kann beispielsweise die mögliche Anzahl der in einem Frame übertragbaren Samples durch die drei Audiokanäle aufgeteilt werden, d. h. in jedem Frame werden Audiosamples der vorhandenen Audiokanäle übertragen.

Damit steuert jeder der Audiokanäle lediglich einen Anteil der Audio Samples in einem Frame oder Zeitschlitz bei. Damit reduziert sich zwar die Übertragung der Audiosamples pro Kanal pro Frame, dies wird jedoch durch die verringerte Frame Latenz zwischen aufeinanderfolgend übertragenen Frames ausgeglichen.

Das drahtlose Multikanal-Audiosystem 100 kann die Kanalbandbreite 6 MHz, 8 MHz oder 10 MHz betragen. Die Audioübertragung kann in den Frequenzbereichen 470 - 698MHz (UHF) oder 1350 - 1525MHz (1G4) erfolgen. Beispielsweis können folgende Frequenzbänder für die Übertragung dienen: TV-UHF (470 - 608 MHz); TV-UHF China (470 - 510 MHz und 610 - 698 MHz); L-Band CEPT (1350 - 400 MHz); L-Band USA (1435 - 1525 MHz).

Ein Zugriff der Teilnehmer auf die Übertragungskanäle erfolgt im Time Division Multiple Access TDMA. Optional kann die Teilnehmeranzahl bis zu z.B. 128 unabhängige Audiokanäle pro Breitbandkanal betragen. Das Modulationsverfahren kann Orthogonal Frequency Division Multiplexing OFDM in Kombination mit verschiedenen Subträger Modulations- oder Kodierverfahren darstellen. Die Audiokodierung kann in verschiedenen Verfahren und Abtastraten sowie im Mischbetrieb erfolgen. Beispielsweise können die Abtastraten 48 kHz oder 96 kHz erfolgen. Die Audiokodierung kann im OPUS Verfahren, im ADPCM Verfahren, im PCM Verfahren oder einem anderen geeigneten Kodierverfahren erfolgen. Eine Synchronisation des TDMA Rasters und der Trägerversatzschätzung CFO Estimation kann über Synchronisationsmuster gewährleistet werden. Ein Basis TDMA Raster ist ≤ 10 ms und kann aufgeteilt werden in 1/2, 1/4, 1/8 oder 1/16 Unterraster.

Die Audioübertragung kann verschlüsselt erfolgen. Die Basisstation 400 kann ein Synchronisationssignal bereitstellen, verbundene bzw. gepairte Geräte verwalten und kann die entsprechenden Kommunikationsressourcen zuteilen. Die Basisstation 400 kann aus den empfangenen Audiosignalen von den Drahtlos-Sendern Audiosignale erzeugen, welche eine Mischung der Audiosignale der Drahtlos-Sendern darstellen kann. Diese Audiosignale können dann ein In-Ear Monitoring Audiosignal darstellen.

Die mobilen Geräte 300, 310 - 350 können sich bei der Basisstation 400 anmelden, um eine Kommunikation mit der Basisstation 400 zu ermöglichen. Die mobilen Geräte 310 - 350 können optional ein Senden von Audiodaten initiieren, wenn sie vorher eine Basisstation 400, mit der sie kommunizieren sollen, erfasst haben.

Hierbei kann es notwendig sein, dass die mobilen Geräte mit der Basisstation "gepaired" werden. Das Pairing kann in mehreren Schritten ablaufen. Zunächst entscheidet der Bediener mit welcher Frequenz die Basisstation den HF-Kanal zur Verfügung stellt. Optional ist die Basisstation dazu eingerichtet, um andere Sender in dem erlaubten Frequenzband zu identifizieren, sodass der Bediener die Frequenz für den HF-Kanal so auswählen kann, dass nach Möglichkeit keine Störungen durch andere Sender auftreten. Die Basisstation sendet auf dem HF-Kanal einen Control-Slot innerhalb eines Frames. In dem Control-Slot ist eine Unique ID der Basisstation enthalten. Nachdem an den mobilen Geräten zum Beispiel mittels Knopfdruck der Pairing-Prozess an dem jeweiligen mobilen Gerät ausgelöst wurde, sucht das mobile Gerät ein HF-Signal, findet den HF-Kanal der Basisstation und liest den Control-Slot aus. In einem anderen Control-Slot sendet dann das mobile Gerät die eigene Unique ID an die Basisstation und wird dort als Gerät angezeigt, das zum Pairing bereit ist. Der Bediener der Basisstation bestätigt das gefundene mobile Gerät, und die Basisstation speichert die Unique ID des mobilen Gerätes ab. Das mobile Gerät empfängt mit dem nächsten Control-Slot eine Bestätigung der Basisstation und speichert seinerseits die Unique ID der Basisstation.

Optional kann das Pairing von dem Bediener der Basisstation abgeschlossen werden, indem der Benutzer einen Pin-Code des mobilen Gerätes verifiziert. Erst nach dem Pairing sind die mobilen Geräte bereit, um ein Signal zu senden. Typischerweise wird das Pairing der mobilen Geräte mit der Basisstation vor einer Produktion von einem Toningenieur durchgeführt, sodass zu einem späteren Zeitpunkt ungepairte Geräte nicht "mitlauschen" können. Weiterhin ist es nicht möglich, dass die Basisstation Signale von nicht gepairten Geräten verarbeitet.

Gemäß einem Aspekt können die mobilen Geräte 310 - 350 auch optional untereinander kommunizieren und Daten austauschen.

Das Audioübertragungsverfahren kann bei jeder TDMA Audioübertragung verwendet werden, solange eine Übertragung von einer Basisstation an einen Empfänger Audiosignale von mindestens zwei Audiokanälen aufweist. Ein Beispiel eines derartigen drahtlosen Multikanal-Audiosystems sind In-Ear Monitor Systeme, wobei die Basisstation ein Audiosignal basierend auf mehreren Audiokanälen zusammenmischt und dieses Signal dann drahtlos an In-Ear Monitoring Einheiten überträgt.

Die Basisstation muss somit über Audiodaten verfügen, welche mehrere (mindestens zwei) Audiokanäle aufweisen. Diese Audiokanäle können aus einer externen Quelle oder von drahtlosen Mikrofonen in dem Multikanal-Audiosystem stammen.

Bodypacks oder Beltpacks können ein Stereosignal am Audioausgang ausgeben.

Für jede der TDMA Ressourcen (d. h. für jeden Stream) in dem Audioübertagungssystem kann festgelegt werden, mittels welcher HF Modulation die drahtlose Übertragung erfolgt.

Beispiele für die HF Modulation sind Q-PSK oder QAM 64. Während die Q-PSK Modulation eine höhere Robustheit gegenüber Störungen und eine höhere Richtweite erlaubt, ermöglicht eine QAM 64 Modulation höhere Datenraten. Die gesamtverfügbare Datenrate für einen Stream ergibt sich dann aus der verwendeten HF-Modulation sowie der Anzahl der zur Verfügung gestellten Time Slots in einem Frame.

Die in einem Stream übertragenen Audiodaten können unkomprimiert oder komprimiert übertragen werden. Die nötige Datenrate für eine unkomprimierte Übertragung eines Audiokanals ergibt sich aus dem Produkt der Samplerate (z. B. 48 kHz, 96 kHz) und der Auflösung, z. B. 16 Bit. Um die Datenrate zu reduzieren, können Audiocodec verwendet werden. Ein Audiocodec kann mittels Parametern so eingestellt werden, dass die Audioqualität auf Kosten der Datenrate erhöht oder umgekehrt die Datenrate auf Kosten der Audioqualität gesenkt wird. Bei der Verwendung von Audiocodec ist darauf zu achten, dass sie eine Latenz für die Verarbeitung aufweisen. Diese Latenz kann beispielsweise 10 ms aufweisen.

Die jeweilige verwendete TDMA Ressource wirkt sich auch auf den Stromverbrauch der mobilen Geräte sowie der Basisstation aus. Je mehr TDMA Ressourcen für einen Stream (Senden/Empfangen) verwendet werden müssen, desto höher der Stromverbrauch. Eine Verwendung eines Audiocodec kann ebenfalls zu einer Erhöhung des Stromverbrauchs führen.

Beispielsweise kann ein effizienter OPUS Codec eine gute Audioqualität bei einer Datenrate von ca. 80 - 90 kbit/s erreichen. Bei der Drahtlosübertragung kann diese Datenrate erreicht werden, wenn 8 von beispielsweise 128 TDMA Slots mit einer niedrigen Modulation (z. B. BPSK) eingesetzt wird. Dies wäre ebenfalls vorteilhaft hinsichtlich der robusten Modulation bei hoher Reichweite. Alternativ dazu kann diese Datenrate von 80 - 90 kbit/s erreicht werden, wenn ein Time Slot von 128 Time Slots in einem Frame mit einer hohen Modulation (z. B. QAM 64) verwendet wird. Ein derartiger Stream hätte eine hohe Modulation bei geringer Reichweite und höherer Latenz. Vorteilhaft ist jedoch, dass die geringeren Ressourceanforderungen für diesen Stream dazu führen können, dass die nicht benötigten TDMA Ressourcen für einen anderen Kanal verwendet werden.

Um Datenschutzanforderungen zu genügen, kann die Kommunikation zwischen den mobilen Geräten und der Basisstation mit einem symmetrischen Schlüssel verschlüsselt werden. Der Schlüsselaustausch zwischen der Basisstation und den mobilen Geräten erfolgt mit einem public/private Key Verfahren.

Fig. 2 zeigt eine Darstellung von Zeitschlitzen verschiedener Drahtlos-Sender, welche von dem Drahtlos-Empfänger empfangen werden. In dem TDMA Verfahren werden den jeweiligen Audiosendern ein Zeitschlitz in einem Frame (Frame) zugeordnet. In Fig. 2 sind beispielhaft acht Zeitschlitze (Time Slots) SL1 - SL8 pro Frame SF vorgesehen. Dies ist jedoch nur ein Beispiel zur Veranschaulichung. Pro Frame können damit acht Zeitschlitze SL1 - SL8 übertragen werden. Die Zeitschlitze SL1 - SL8 werden in jedem Frame SF wiederholt.

In diesem Beispiel sind drei Streams S1, S2, S3 vorhanden. Jedem Stream ist ein Drahtlos-Audiosender zugeordnet. Des Weiteren können in dem Frame SF Zeitschlitze S0 vorhanden sein, welche nicht genutzt werden. In dem Beispiel von Fig. 2 benötigt der erste Stream S1 2/8 der Ressourcen, der Stream S2 4/8 und der Stream S3 1/8 der Ressourcen.

Der erste Stream S1 belegt die Zeitschlitze SL4 und SL8. Der erste, dritte, fünfte und siebte Zeitschlitz SL1, SL3, SL5, SL7 wird durch den zweiten Stream S2 belegt. Der dritte Stream S3 belegt den Zeitschlitz SL2. Der sechste Zeitschlitz SL6 wird nicht genutzt.

Bei der Übertragung der Audiodaten der jeweiligen Drahtlos-Audiosender ist es wichtig, dass die Latenz der jeweiligen Audioübertragung möglichst gering ist.

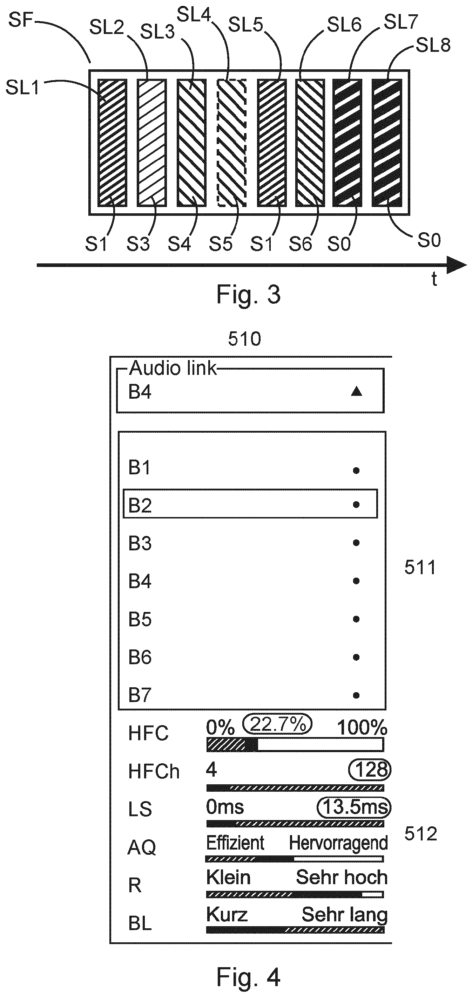

Fig. 3 zeigt eine schematische Darstellung eines Frames bei der Übertragung der Audiodaten. In Fig. 3 ist insbesondere ein Frame SF mit acht Zeitschlitzen SL1 - SL 8 dargestellt. Hierbei werden zwei Zeitschlitze SL7, SL8 nicht zur Übertragung der Audiodaten benötigt. Damit sind diese Zeitschlitze freie Zeitschlitze S0. In diesem Beispiel nutzt ein erster Stream S1 Stream 2/8 der Ressourcen und vier weitere Streams S2 - S5 nutzen jeweils 1/8 Ressourcen. Da zwei Zeitschlitze S0 nicht genutzt werden, könnte ein weiterer Stream, der 2/8 Ressourcen benötigt, in den Frame SF mit aufgenommen werden. Wenn dieser Stream jedoch an der Stelle eingefügt wird, wo die beiden nicht genutzten Zeitschlitze SL7, SL8 vorgesehen sind, dann kann dies zu einer Verschlechterung der Latenz des neuen Streams führen.

Fig. 4 zeigt eine schematische Darstellung einer grafischen Nutzerschnittstelle. Auf der grafischen Darstellung bzw. auf der Nutzeroberfläche kann der Nutzer einen neu hinzuzufügenden Audiostream auswählen. Die Nutzerschnittstelle bzw. Benutzeroberfläche 510 weist einen ersten und zweiten Fenster 511, 512 auf. In dem ersten Fenster 511 können verschiedene Übertragungsbetriebsarten dargestellt werden. In dem zweiten Fenster 512 können Übertragungs- und/oder Systemparameter dargestellt werden.

Dem Audiostream können TDMA Ressourcen (Übertragungsqualitäten und Übertragungsparameter) zugeordnet werden. Die Basisstation 400 ermittelt dann für das Einfügen eines Audiostreams diejenigen Übertragungs-Betriebsarten, die bei der derzeitigen Auslastung des Multikanal-Audiosystems frei sind und somit für die Übertragung des neuen Audiostreams verwendet werden können. Die möglichen Übertragungsbetriebsarten B1 - B7 können auf der Nutzeroberfläche darstellt werden. In Fig. 4 ist beispielsweise die Übertragungsbetriebsart B4 ausgewählt.

**Tabelle 1**

| **Betriebsart** | **Abtastrate (kHz)** | **Belegte Zeitslots** | **max. Anzahl Kanäle** | **Latenz (%)** |
|---|---|---|---|---|
| B1 | 48 | 8 | 16 | 61 |
| B2 | 48 | 1 | 128 | 100 |
| B3 | 48 | 4 | 32 | 23 |
| B4 | 48 | 8 | 16 | 16 |
| B5 | 96 | 16 | 8 | 7 |
| B6 | 48 | 4 | 32 | 23 |

Tabelle 1 zeigt beispielhaft einige Übertragungsparameter für die Übertragungsbetriebsarten B1 - B6, um die unterschiedlichen TDMA Ressourcenanforderungen darzustellen
Auf dem zweiten Fenster 211 der Benutzeroberfläche510 können Übertragungs- und/oder Systemparameter, welcher der ausgewählten Übertragungsbetriebsart zugeordnet sind, dargestellt werden. Diese Parameter können die HF Kapazität HFC (0 % - 100 %), die maximale Anzahl der HF Kanäle HFCh (4 - 128 Kanäle), die Systemlatenz LS (0 ms - 13,5 ms), die Audioqualität AQ (effizient - hervorragend), die Reichweite R (klein - sehr hoch) und/oder die Batterielaufdauer BL (kurz - sehr lang) darstellen.

Optional kann bei einer Auswahl einer der Übertragungsbetriebsart durch den Anwender die Basisstation die entsprechenden Übertragungsparameter und Systemparameter berechnen und darstellen. Diese Darstellung kann beispielsweise schraffiert oder in einer anderen Art und Weise erfolgen. Bei der Auswahl einer der möglichen Übertragungsbetriebsarten durch den Anwender werden somit auch die dazugehörigen Übertragungsparameter und Systemparameter dargestellt. Damit kann der Anwender oder Nutzer überprüfen, ob die von ihm gewünschte Übertragung des weiteren Audiostreams mit den zur Verfügung stehenden TDMA Ressourcen möglich ist. Erst anschließend kann das Hinzufügen des neuen Streams freigegeben werden. Falls die verfügbaren TDMA Ressourcen für eine der möglichen Übertragungsbetriebsarten nicht mehr ausriechen, dann kann dies kenntlich gemacht werden.

Beim Vorauswählen einer möglichen Übertragungsbetriebsart durch den Nutzer ermittelt die Basisstation die damit verbundenen Übertragungs- und/oder Systemparameter. Diese Parameter können in dem zweiten Fenster 512 dargestellt werden.

Optional kann für jedes mobile Gerät, das einen Audiostream zu übertragen hatte, eine Mindestübertragungsqualität zugeordnet werden. Diese zugeordnete Mindestübertragungsqualität kann das mobile Gerät beispielsweise in einem Control Slot (Steuerzeitschlitz) in dem TDMA Frame an die Basisstation übertragen. Alternativ dazu kann die Auswahl der Mindestübertragungsqualität durch den Benutzer über die Nutzerschnittstelle erfolgen.

Dadurch, dass ein zweistufiger Prozess vorhanden ist, bevor ein Audiostream tatsächlich der Audioübertragung hinzugefügt wird, kann der Nutzer in dem ersten Schritt durch Auswahl der möglichen Übertragungsbetriebsarten feststellen, welche der möglichen Übertragungsbetriebsarten verwendet werden können. Insbesondere kann der Nutzer durch Auswahl der zur Verfügung stehenden Übertragungs-Betriebsarten überprüfen, ob ausreichend TDMA Ressourcen in der Drahtlos-Übertragung vorhanden sind. Erst wenn der Nutzer dies sichergestellt hat, kann ein tatsächliches Hinzufügen des Audiostreams in die Audioübertragung erfolgen.

Die Basisstation ist dazu ausgestaltet, die Drahtlos-Übertragung zwischen ihr und den mobilen Geräten zu steuern. Insbesondere kann die Basisstation dem jeweiligen zu übertragenden Audiostream entsprechende TDMA Ressourcen (wie beispielsweise der Zeitschlitze in dem Frame) zuweisen. Mit anderen Worten, die Übertragung der Audiostreams kann basierend auf unterschiedlichen Übertragungsbetriebsarten mit unterschiedlichen Übertragungsqualitäten und/oder Übertragungsparametern erfolgen. Jeder Übertragungsbetriebsart kann eine spezifische Übertragungsqualität und/oder spezifische Übertragungsparameter zugeordnet werden.

Die unterschiedlichen möglichen Übertragungsbetriebsarten können auf dem User Interface 510 (Nutzerschnittstelle / Benutzeroberfläche) in der Steuerkonsole 500 dargestellt werden. Alternativ dazu kann die Nutzerschnittstelle 510 auch in der Basisstation 400 integriert sein. Alternativ dazu kann die Nutzerschnittstelle 510 auch in einem externen Gerät (z.B. das Mischpult) oder auf einem externen mobilen Gerät dargestellt werden.

Mittels der Nutzerschnittstelle 510 kann der Nutzer die Drahtlos-Übertragung in dem Multikanal-Audiosystem steuern. Anhand der Nutzerschnittstelle kann ein Nutzer eine Drahtlos-Übertragung von Audiostreams beenden oder einen neuen Audiostream hinzufügen. Hierbei muss darauf geachtet werden, dass ausreichend TDMA Übertragungskapazitäten vorhanden sind, um alle Audiostreams übertragen zu können. Durch Variation der Übertragungsbetriebsarten kann die maximale Anzahl der übertragbaren Audiostreams beeinflusst werden. Mit anderen Worten, wenn in einem Frame beispielsweise 128 TDMA Zeitschlitze vorhanden sind, dann können maximal 128 Audiostreams jeweils mit einem Zeitschlitz pro Frame übertragen werden. Wenn aber beispielsweise zwei Audiostreams jeweils mit zehn Zeitschlitzen übertragen werden sollen, dann können lediglich 108 weitere Audiostreams übertragen werden. Je höher die TDMA Anforderungen für eine Übertragung von Audiostreams sind, desto geringer die maximal mögliche Anzahl an übertragbaren Audiostreams.

Die Basisstation kann Übertragungsparameter für jeden Audiostream sowie für die Gesamt-Drahtlosübertragung erfassen und darstellen. Anhand der Übertragungsparameter sowie der Anzahl der zu übertragenden Audiostreams kann die Basisstation die Belegung der zur Verfügung stehenden HF Kapazität HFC, Anzahl der möglichen freien HF Kanäle HFCh zur Übertragung der Audiostreams, die Systemlatenz LS, die Audioqualität AQ für jeden Stream, die Reichweite R einer Drahtlos-Übertragung zwischen einem mobilen Gerät und der (stationären) Basisstation ermitteln und auf der Nutzerschnittstelle darstellen. Ferner kann die Basisstation Parameter der jeweiligen mobilen Geräte wie beispielsweise die Batterielaufzeit erfassen.

Wenn in einer laufenden Drahtlos-Übertragung mindestens ein weiterer Audiostream einzufügen ist, dann kann der Nutzer mittels der Nutzerschnittstelle eine Betriebsart für die Drahtlos-Übertragung auswählen. Die Basisstation kann dann die hierfür benötigen TDMA Ressourcen sowie die Auswirkungen auf die Übertragungsparameter des gesamten Multikanal-Audiosystems ermitteln. Die Übertragungsparameter für den neuen Audiostream sowie die darauf resultierenden Auswirkungen auf das Gesamtsystem können auf der Nutzerschnittstelle dargestellt werden. Damit kann der Nutzer die beabsichtigte Änderung der Drahtlos-Übertragung sowie deren Auswirkungen überprüfen. Erst anschließend kann dann der Nutzer das Hinzufügen des weiteren Audiostreams freigeben. Erst nach Freigabe übermittelt die Basisstation Neu- oder Umverteilungsinformationen über die Steuerdaten 201 an die beteiligten mobilen Geräte.

Optional können die jeweiligen Übertragungs- und Systemparameter als Balken dargestellt werden. Alternativ dazu können die Parameter auch als prozentuale Parameter oder in einer anderen grafischen Form dargestellt werden. Insbesondere kann hierbei sowohl der Wert des tatsächlichen System- oder Übertragungsparameters als auch sein prozentualer Anteil an den Systemparametern des gesamten Systems dargestellt werden. Beispielsweise kann die durch den neuen Audiostream benötigte HF Kapazität in absoluten Zahlen oder prozentual dargestellt werden.

Wenn der Nutzer einen neuen Audiostream einfügen möchte und diesen Audiostream auswählt, dann ermittelt die Basisstation die dazu benötigten Übertragungs- und Systemparameter und kann diese über die Nutzerschnittstelle darstellen. Dies dient als Entscheidungshilfe für den Nutzer, um das Hinzufügen eines neuen Audiostreams sicher planen zu können. Falls für das Hinzufügen eines geplanten Audiostreams nicht mehr ausreichend TDMA Ressourcen vorhanden sind, dann kann eine Fehlermeldung auf der Nutzerschnittstelle ausgegeben werden.

Ferner kann optional dem Nutzer auf der Nutzerschnittstelle dargestellt werden, welche anderen Audiostreams zu entfernen wären, um den gewünschten neuen Audistream in der gewünschten Übertragungsbetriebsart realisieren zu können. Dies ist vorteilhaft, weil damit die Planung des Multikanal-Audiosystems vereinfacht wird.

Optional können nach Auswahl eines neu hinzuzufügenden Audiostreams mit dessen TDMA Ressourcenanforderungen diejenigen Betriebsarten für die Drahtlos-Übertragung, welche aufgrund bereits belegter TDMA Ressourcen nicht zur Verfügung stehen, auch nicht dargestellt werden oder zumindest nicht ausgewählt werden. Beispielsweise kann eine entsprechende Betriebsart ausgegraut dargestellt sein.

Gemäß der Erfindung kann der Nutzer somit mittels der grafischen Darstellung der Systemparameter auf der Nutzerschnittstelle darin unterstützt werden, die vorhandenen TDMA Ressourcen unterschiedlichen mobilen Geräten zuzuordnen, so dass eine optimale Drahtlos-Übertragung verschiedener Audiostreams in dem Multikanal-Audiosystem ermöglicht wird.

### Bezugszeichenliste

- 100: drahtloses Multikanal-Audiosystem
- 200: Antenne
- 201: Steuerdaten
- 202: Kabel
- 300: mobile Geräte
- 310: handgehaltenes Mikrofon (mobiler Sender)
- 311: erste Audiodaten
- 320: Mehrkanalmikrofon (mobiler Sender)
- 321: zweite Audiodaten
- 330: erster Bodypack oder Beltpack (mobiler Empfänger)
- 331: Audiodaten
- 340: zweiter Bodypack oder Beltpack (mobiler Empfänger)
- 341: Audiodaten
- 350: mobiles Empfangsgerät
- 351: dritte Audiodaten
- 400: Basisstation
- 500: Steuerkonsole
- 510: Nutzerschnittstelle
- 511 1.: Fenster
- 512 2.: Fenster
- 600: Mischpult

## Patentansprüche

1. Verfahren zum Steuern eines Drahtlos-Multikanal-Audiosystems (100), wobei das System (100) mindestens zwei mobile Geräte (300) jeweils zum Senden und/oder Empfangen von Audiodaten in Form mindestens eines Audiostreams und mindestens eine Basisstation (400) aufweist, wobei die mobilen Geräte (300) und die Basisstation (400) Audiodaten in Form eines Audiostreams drahtlos in einem Time Division Multiplex Access TDMA Verfahren basierend auf einer Übertragungsbetriebsart austauschen, wobei diese Drahtlosübertragung auf der Basis von sich wiederholenden Frames (SF) erfolgt, wobei jeder Frame (SF) eine Anzahl von Zeitschlitzen (SL) aufweist, wobei jedes mobile Gerät (300) mindestens einmal pro Frame (SF) Audiodaten eines Audiostreams in mindestens einem Zeitschlitz (SL) überträgt oder empfängt, wobei jeder in dem Frame (SF) übertragene Audiostream einen Anteil der Zeitschlitze (SL) des Frames (SF) gemäß einer Übertragungsbetriebsart belegt, wobei die Drahtlosübertragung zwischen der Basisstation (400) und den mobilen Geräten (300) basierend auf einer Mehrzahl von möglichen Übertragungsbetriebsarten jeweils mit unterschiedlichen TMDA Ressourcenanforderungen erfolgt, **gekennzeichnet durch** die Schritte:
- Übertragen von Audiodaten in Form mindestens eines Audiostreams in einer der Übertragungsbetriebsarten,
- Ermitteln von aktuell belegten TDMA Ressourcen, nämlich Übertragungsparameter und/oder Systemparameter, des Audiostreams,
- Darstellen der aktuell belegten TDMA Ressourcen nämlich Übertragungsparameter und/oder Systemparameter, des Audiostreams auf einer Nutzerschnittstelle (510),
- auf eine Nutzereingabe hin Ermitteln der TDMA Ressourcenanforderungen für den Audiostream in einer vorausgewählten Übertragungsbetriebsart,
- Darstellen der TDMA Ressourcenanforderungen für die vorausgewählte Übertragungsbetriebsart auf der Nutzerschnittstelle, um einen Vergleich zwischen den aktuellen belegten TDMA Ressourcen in der aktuellen Übertragungsbetriebsart und den TDMA Ressourcenanforderungen in der durch den Nutzer vorausgewählten Übertragungsbetriebsart zu ermöglichen, und
- Übertragen von Steuerdaten (201) durch die Basisstation (400) an die mobilen Geräte (300) zum Ändern der Übertragungsbetriebsart auf die vorausgewählte Übertragungsbetriebsart, falls der Nutzer eine Änderung der Übertragungsbetriebsart initiiert hat.

2. Verfahren zum Steuern eines Drahtlos-Multikanal-Audiosystems (100) nach Anspruch 1, ferner mit den Schritten
Ermitteln der Unterschiede zwischen den aktuell belegten TDMA Ressourcen in der aktuellen Übertragungsbetriebsart und den TDMA Ressourcenanforderungen in der durch den Nutzer vorausgewählten Übertragungsbetriebsart und Darstellen der Unterschiede auf der Nutzerschnittstelle (510).

3. Verfahren zum Steuern eines Drahtlos-Multikanal-Audiosystems (100) nach Anspruch 1 oder 2, wobei
die Drahtlosübertragung in Frequenzbereichen 470 - 698MHz oder 1350 - 1525MHz erfolgt.

4. Verfahren zum Steuern eines Drahtlos-Multikanal-Audiosystems (100) nach einem der Ansprüche 1 bis 3, wobei
die mobilen Geräte (300) Drahtlos-Sender und/oder Drahtlos-Empfänger darstellen,
wobei die Drahtlos-Sender als Drahtlos-Mikrofone und die Drahtlos-Empfänger als In-Ear-Monitoring-Einheit ausgestaltet sind.

5. Verfahren zum Steuern eines Drahtlos-Multikanal-Audiosystems (100) nach einem der Ansprüche 1 bis 4, wobei
die Basisstation (400) den mobilen Geräten (300) mittels der Steuerdaten (201) Informationen zur ausgewählten neuen Übertragungsbetriebsart überträgt,
wobei die mobilen Geräte (300) dann basierend auf den Steuerdaten (201) in die neue Übertragungsbetriebsart wechseln.

6. Verfahren zum Steuern eines Drahtlos-Multikanal-Audiosystems (100) nach einem der Ansprüche 1 bis 5, wobei
die Benutzerschnittstelle (510) ein erstes und ein zweites Fenster (511, 512) aufweist,
wobei das erste Fenster (511) zur Darstellung möglicher Übertragungsbetriebsarten (B1 - B7) verwendet wird,
wobei das zweite Fenster (512) zur Darstellung von Übertragungs- und/oder Systemparametern der Übertragungsbetriebsarten (B1 - B7) verwendet wird,
wobei in dem zweiten Fenster (512) eine HF Kapazität, eine maximale Anzahl von HF-Kanälen, eine Systemlatenz, eine Audioqualität, eine Reichweite und/oder eine Batterielaufdauer für eine der in dem ersten Fenster (511) ausgewählten Übertragungsbetriebsarten dargestellt ist.

7. Verfahren zum Steuern eines Drahtlos-Multikanal-Audiosystems (100) nach Anspruch 6, wobei
in dem zweiten Fenster (512) eine Darstellung einer Auslastung der jeweiligen Übertragungs- und/oder Systemparameter für eine im ersten Fenster (511) ausgewählte Betriebsart gezeigt ist.

8. Verfahren zum Steuern eines Drahtlos-Multikanal-Audiosystems (100) nach Anspruch 6 oder 7, wobei
im zweiten Fenster (512) der Parameter Hochfrequenz-Kapazität (HFC) zwischen 0 und 100 %, der Parameter der maximalen Anzahl der HF Kanäle (HFCh) zwischen 4 und 128, die Systemlatenz (LS) zwischen 0 ms und 13,5 ms, der Parameter der Audioqualität (AQ) zwischen effizient und exzellent, der Parameter der Reichweite (R) zwischen klein und sehr hoch und/oder wobei der Parameter der Batterielaufdauer (BL) zwischen kurz und sehr lang sein kann.

9. Drahtlos-Multikanal-Audiosystem (100), insbesondere nach ETSI EN 300422, mit
mindestens zwei mobilen Geräten (300) jeweils zum Senden und/oder Empfangen von Audiodaten in Form mindestens eines Audiostreams und
mindestens einer Basisstation (400),
wobei die mobilen Geräte (300) und die Basisstation (400) dazu ausgestaltet sind, Audiodaten drahtlos in einem Time Division Multiplex Access TDMA Verfahren basierend auf einer Übertragungsbetriebsart auszutauschen,
wobei die Drahtlosübertragung zwischen der Basisstation (400) und den mobilen Geräten (300) basierend auf einer Mehrzahl von möglichen Übertragungsbetriebsarten jeweils mit unterschiedlichen TMDA Ressourcenanforderungen erfolgt,
wobei die Drahtlos-Übertragung auf der Basis von sich wiederholenden Frames erfolgt,
wobei jeder Frame eine Anzahl von Zeitschlitzen aufweist,
wobei jedes mobile Gerät mindestens einmal pro Frame Audiodaten eines Audiostreams in mindestens einem Zeitschlitz überträgt oder empfängt,
wobei jeder in dem Frame (SF) übertragene Audiostream einen Anteil der Zeitschlitze des Frames (SF) gemäß einer Übertragungsbetriebsart belegt,
wobei die Basisstation (400) dazu ausgestaltet ist, Steuerdaten an die mobilen Geräte zum Steuern der Drahtlos-Übertragung zu übertragen, **dadurch gekennzeichnet, dass** die Basisstation (400) dazu ausgestaltet ist, folgende Schritte auszuführen:
- Übertragen von Audiodaten in Form mindestens eines Audiostreams in einer der Übertragungsbetriebsarten,
- Ermitteln von aktuell belegten TDMA Ressourcen, nämlich Übertragungsparameter und/oder Systemparameter, des Audiostreams,
- Darstellen der aktuell belegten TDMA Ressourcen nämlich Übertragungsparameter und/oder Systemparameter, des Audiostreams auf einer Nutzerschnittstelle (510),
- auf eine Nutzereingabe hin Ermitteln der TDMA Ressourcenanforderungen für den Audiostream in einer vorausgewählten Übertragungsbetriebsart,
- Darstellen der TDMA Ressourcenanforderungen für die vorausgewählte Übertragungsbetriebsart auf der Nutzerschnittstelle, um einen Vergleich zwischen den aktuellen belegten TDMA Ressourcen in der aktuellen Übertragungsbetriebsart und den TDMA Ressourcenanforderungen in der durch den Nutzer vorausgewählten Übertragungsbetriebsart zu ermöglichen, und
- Übertragen von Steuerdaten (201) durch die Basisstation (400) an die mobilen Geräte (300) zum Ändern der Übertragungsbetriebsart auf die vorausgewählte Übertragungsbetriebsart, falls der Nutzer eine Änderung der Übertragungsbetriebsart initiiert hat.

## Claims

1. A method for controlling a wireless multi-channel audio system (100), said system (100) comprises at least two mobile devices (300) each for transmitting and/or receiving audio data in form of at least one audio stream, and at least one base station (400), wherein said mobile devices (300) and said base station (400) wirelessly exchange audio data in form of an audio stream in a Time Division Multiple Access (TDMA) method based on a transmission mode, wherein the wireless transmission is carried out on the basis of repeating frames (SF), wherein each frame (SF) comprises a number of time slots (SL), wherein each mobile device (300) transmits or receives audio data of an audio stream in at least one time slot (SL) at least once per frame (SF), wherein each audio stream transmitted within the frame (SF) uses a share of the time slots (SL) of the frame (SF) according to a transmission mode, and wherein the wireless transmission between the base station (400) and the mobile devices (300) is carried out based on a plurality of possible transmission modes, each having distinct TDMA resource needs, **characterized by** the following steps:
- transmitting audio data in form of at least one audio stream in one of the transmission modes,
- determining currently occupied TDMA resources, namely transmission parameters and/or system parameters, of the audio stream,
- displaying the currently occupied TDMA resources, namely transmission parameters and/or system parameters, of the audio stream on a user interface (510),
- in response to a user input, determining the TDMA resource requirements for the audio stream in a preselected transmission mode,
- displaying the TDMA resource requirements for the preselected transmission mode on the user interface to allow a comparison between the currently occupied TDMA resources in the current transmission mode and the TDMA resource requirements in the user-preselected transmission mode, and
- transmitting control data (201) by the base station (400) to the mobile devices (300) for changing the transmission mode to the preselected transmission mode, if the user has initiated a change of the transmission mode.

2. The method for controlling a wireless multi-channel audio system (100) according to claim 1, additionally comprising the steps of:
determining of differences between the currently occupied TDMA resources in the current transmission mode and the TDMA resource requirements of the user-preselected transmission mode, and displaying these differences on the user interface (510).

3. The method for controlling a wireless multi-channel audio system (100) according to claim 1 or 2, wherein
the wireless transmission is carried out in the frequency bands of 470 - 698 MHz or 1350 - 1525 MHz.

4. The method for controlling a wireless multi-channel audio system (100) according to anyone of claims 1 to 3, wherein
the mobile devices (300) are wireless transmitters and/or wireless receivers, wherein the wireless transmitters are configured as wireless microphones and the wireless receivers are configured as in-ear monitoring devices.

5. The method for controlling a wireless multi-channel audio system (100) according to anyone of claims 1 to 4, wherein
the base station (400) transmits information relating to the selected new transmission mode to the mobile devices (300) by means of the control data (201),
wherein the mobile devices (300) subsequently change to the new transmission mode based on said control data (201).

6. The method for controlling a wireless multi-channel audio system (100) according to anyone of claims 1 to 5, wherein
the user interface (510) comprises a first window (511) and a second window (512),
wherein the first window (511) is used to display possible transmission modes (B1 - B7),
wherein the second window (512) is used to display transmission and/or system parameters of the transmission modes (B1 - B7),
wherein the second window (512) is used to display an RF capacity, a maximum quantity of RF channels, a system latency, an audio quality, a range, and/or a battery duration for one of the transmission modes selected in the first window (511).

7. The method for controlling a wireless multi-channel audio system (100) according to claim 6, wherein
the second window (512) displays a representation of the usage of the corresponding transmission and/or system parameters for an operating mode selected in the first window (511).

8. The method for controlling a wireless multi-channel audio system (100) according to claim 6 or 7, wherein,
in the second window (512), the radio frequency capacity (HFC) parameter may range from 0 to 100%, the maximum number of RF channels (HFCh) parameter from 4 to 128, the system latency (LS) from 0 ms to 13.5 ms, the audio quality (AQ) parameter from efficient to excellent, the range (R) parameter from small to very high, and/or the battery life (BL) parameter from short to very long.

9. A wireless multi-channel audio system (100), particularly in accordance with ETSI EN 300422, comprising
at least two mobile devices (300) for each transmitting and/or receiving audio data in form of at least one audio stream, and
at least one base station (400),
wherein the mobile devices (300) and the base station (400) are configured to wirelessly exchange audio data in a Time Division Multiple Access (TDMA) method based on a transmission mode,
wherein the wireless transmission between the base station (400) and the mobile devices (300) is carried out on a plurality of possible transmission modes, each with distinct TDMA resource requirements,
wherein the wireless transmission is carried out on the basis of repeating frames,
wherein each frame comprises a number of time slots,
wherein each mobile device transmits or receives audio data of an audio stream in at least one time slot at least once per frame,
wherein each audio stream transmitted in the frame (SF) occupies a portion of the time slots of the frame (SF) according to a transmission mode,
wherein the base station (400) is configured to transmit control data to the mobile devices for controlling the wireless transmission,
**characterized in that** the base station (400) is configured to execute the following steps:
- transmitting audio data as at least one audio stream in one of the transmission modes,
- determining the currently occupied TDMA resources, namely transmission parameters and/or system parameters, of the audio stream,
- displaying the currently occupied TDMA resources, namely transmission parameters and/or system parameters, of the audio stream on a user interface (510),
- in response to a user input, determining the TDMA resource requirements for the audio stream in a preselected transmission mode,
- displaying the TDMA resource requirements for the preselected transmission mode on the user interface to allow a comparison between the currently occupied TDMA resources in the current transmission mode and the TDMA resource requirements in the user-preselected transmission mode, and
- transmitting control data (201) from the base station (400) to the mobile devices (300) to change the transmission mode to the preselected transmission mode, if the user has initiated a change of the transmission mode.

## Revendications

1. Procédé de commande d'un système audio multicanal sans fil (100), dans lequel le système (100) présente au moins deux appareils mobiles (300) chacun pour envoyer et/ou recevoir des données audio sous la forme d'au moins un flux audio et au moins une station de base (400), dans lequel les appareils mobiles (300) et la station de base (400) échangent des données audio sous la forme d'un flux audio sans fil dans un procédé d'accès multiple par répartition dans le temps TDMA basé sur un mode de transmission, dans lequel cette transmission sans fil s'effectue sur la base de trames (SF) répétitives, dans lequel chaque trame (SF) présente un certain nombre de créneaux temporels (SL), dans lequel chaque appareil mobile (300) émet ou reçoit au moins une fois par trame (SF) des données audio d'un flux audio dans au moins un créneau temporel (SL), dans lequel chaque flux audio transmis dans la trame (SF) occupe une partie des créneaux temporels (SL) de la trame (SF) selon un mode de transmission, dans lequel la transmission sans fil entre la station de base (400) et les appareils mobiles (300) s'effectue sur la base d'une pluralité de modes de transmission possibles, chacun avec des exigences de ressources TMDA différentes, **caractérisé par** les étapes :
- la transmission de données audio sous la forme d'au moins un flux audio dans l'un des modes de transmission,
- la détermination de ressources TDMA actuellement occupées, à savoir les paramètres de transmission et/ou paramètres système, du flux audio,
- la représentation des ressources TDMA actuellement occupées, à savoir les paramètres de transmission et/ou les paramètres système, du flux audio sur une interface utilisateur (510),
- la détermination, en réponse à une entrée de l'utilisateur, des exigences de ressources TDMA pour le flux audio dans un mode de transmission présélectionné,
- la représentation des exigences de ressources TDMA pour le mode de transmission présélectionné sur l'interface utilisateur pour permettre une comparaison entre les ressources TDMA actuellement occupées dans le mode de transmission actuel et les exigences de ressources TDMA dans le mode de transmission présélectionné par l'utilisateur, et
- la transmission de données de commande (201) par la station de base (400) aux appareils mobiles (300) pour modifier le mode de transmission en mode de transmission présélectionné si l'utilisateur a initié une modification du mode de transmission.

2. Procédé de commande d'un système audio multicanal sans fil (100) selon la revendication 1, en outre avec les étapes
la détermination des différences entre les ressources TDMA actuellement occupées dans le mode de transmission actuel et les exigences de ressources TDMA dans le mode de transmission présélectionné par l'utilisateur et la représentation des différences sur l'interface utilisateur (510).

3. Procédé de commande d'un système audio multicanal sans fil (100) selon la revendication 1 ou 2, dans lequel
la transmission sans fil s'effectue dans les plages de fréquence 470-698 MHz ou 1350 - 1525 MHz.

4. Procédé de commande d'un système audio multicanal sans fil (100) selon l'une quelconque des revendications 1 à 3, dans lequel
les appareils mobiles (300) représentent des émetteurs sans fil et/ou des récepteurs sans fil,
dans lequel les émetteurs sans fil sont configurés comme des microphones sans fil et les récepteurs sans fil comme une unité de surveillance intra-auriculaire.

5. Procédé de commande d'un système audio multicanal sans fil (100) selon l'une quelconque des revendications 1 à 4, dans lequel
la station de base (400) transmet aux appareils mobiles (300) des informations sur le nouveau mode de transmission sélectionné au moyen des données de commande (201),
dans lequel les appareils mobiles (300) passent alors au nouveau mode de transmission sur la base des données de commande (201).

6. Procédé de commande d'un système audio multicanal sans fil (100) selon l'une quelconque des revendications 1 à 5, dans lequel
l'interface utilisateur (510) présente une première et une seconde fenêtre (511, 512),
dans lequel la première fenêtre (511) est utilisée pour représenter des modes de transmission (B1- B7) possibles,
dans lequel la seconde fenêtre (512) est utilisée pour représenter des paramètres de transmission et/ou système des modes de transmission (B1- B7),
dans lequel une capacité HF, un nombre maximal de canaux HF, une latence système, une qualité audio, une portée et/ou une autonomie de batterie pour l'un des modes de transmission sélectionnés dans la première fenêtre (511) est représenté(e) dans la seconde fenêtre (512).

7. Procédé de commande d'un système audio multicanal sans fil (100) selon la revendication 6, dans lequel
une représentation d'une utilisation des paramètres de transmission et/ou système respectifs pour un mode de fonctionnement sélectionné dans la première fenêtre (511) est montrée dans la seconde fenêtre (512).

8. Procédé de commande d'un système audio multicanal sans fil (100) selon la revendication 6 ou 7, dans lequel,
dans la seconde fenêtre (512), le paramètre de capacité haute fréquence (HFC) peut être compris entre 0 et 100 %, le paramètre de nombre maximal de canaux HF (HFCh) entre 4 et 128, la latence système (LS) entre 0 ms et 13,5 ms, le paramètre de qualité audio (AQ) entre efficace et excellent, le paramètre de portée (R) entre faible et très élevé et/ou dans lequel le paramètre d'autonomie de batterie (BL) peut être compris entre court et très long.

9. Système audio multicanal sans fil (100), en particulier selon ETSI EN 300422, avec
au moins deux appareils mobiles (300) chacun pour envoyer et/ou recevoir des données audio sous la forme d'au moins un flux audio et
au moins une station de base (400),
dans lequel les appareils mobiles (300) et la station de base (400) sont configurés pour échanger des données audio sans fil dans un procédé d'accès multiple par répartition dans le temps TDMA sur la base d'un mode de transmission,
dans lequel la transmission sans fil entre la station de base (400) et les appareils mobiles (300) s'effectue sur la base d'une pluralité de modes de transmission possibles, chacun avec des exigences de ressources TMDA différentes,
dans lequel la transmission sans fil s'effectue sur la base de trames répétitives,
dans lequel chaque trame présente un certain nombre de créneaux temporels,
dans lequel chaque appareil mobile transmet ou reçoit au moins une fois par trame des données audio d'un flux audio dans au moins un créneau temporel,
dans lequel chaque flux audio transmis dans la trame (SF) occupe une partie des créneaux temporels de la trame (SF) selon un mode de transmission,
dans lequel la station de base (400) est configurée pour transmettre des données de commande aux appareils mobiles pour commander la transmission sans fil, **caractérisé en ce que** la station de base (400) est configurée pour effectuer les étapes suivantes :
- la transmission de données audio sous la forme d'au moins un flux audio dans l'un des modes de transmission,
- la détermination de ressources TDMA actuellement occupées, à savoir les paramètres de transmission et/ou paramètres système, du flux audio,
- la représentation des ressources TDMA actuellement occupées, à savoir les paramètres de transmission et/ou paramètres système, du flux audio sur une interface utilisateur (510),
- la détermination, en réponse à une entrée de l'utilisateur, des exigences de ressources TDMA pour le flux audio dans un mode de transmission présélectionné,
- la représentation des exigences de ressources TDMA pour le mode de transmission présélectionné sur l'interface utilisateur pour permettre une comparaison entre les ressources TDMA actuellement occupées dans le mode de transmission actuel et les exigences de ressources TDMA dans le mode de transmission présélectionné par l'utilisateur, et
- la transmission de données de commande (201) par la station de base (400) aux appareils mobiles (300) pour modifier le mode de transmission en mode de transmission présélectionné si l'utilisateur a initié une modification du mode de transmission.
